(19) Europäisches Patentamt
European Patent Office
Office européen des brevets

(11) EP 1 531 987 B1

(12) EUROPÄISCHE PATENTSCHRIFT

(45) Veröffentlichungstag und Bekanntmachung des Hinweises auf die Patenterteilung:
**07.12.2011 Patentblatt 2011/49**

(21) Anmeldenummer: **03792370.3**

(22) Anmeldetag: **19.08.2003**

(51) Int Cl.:
***B32B 27/32*** *(2006.01)*

(86) Internationale Anmeldenummer:
**PCT/EP2003/009156**

(87) Internationale Veröffentlichungsnummer:
**WO 2004/018202 (04.03.2004 Gazette 2004/10)**

# (54) POLYOLEFIN-MEHRSCHICHTFOLIE, VERFAHREN ZU IHRER HERSTELLUNG UND IHRE VERWENDUNG

MULTIPLY POLYOLEFIN SHEET, METHOD FOR MAKING SAME AND RELATED USE

FEUILLE DE POLYOLEFINE MULTICOUCHE, PROCEDE DE FABRICATION ET UTILISATION ASSOCIES

(84) Benannte Vertragsstaaten:
**AT BE BG CH CY CZ DE DK EE ES FI FR GB GR HU IE IT LI LU MC NL PT RO SE SI SK TR**

(30) Priorität: **21.08.2002 DE 10238516**

(43) Veröffentlichungstag der Anmeldung:
**25.05.2005 Patentblatt 2005/21**

(73) Patentinhaber: **Topas Advanced Polymers GmbH**
**65926 Frankfurt am Main (DE)**

(72) Erfinder:
- **BEER, Ekkehard**
  **65307 Bad Schwalbach (DE)**
- **GOERLITZ, Wolfram**
  **65193 Wiesbaden (DE)**
- **HOECKER, Bernd**
  **65345 Eltville-Rauenthal (DE)**

(74) Vertreter: **Ackermann, Joachim**
**Postfach 11 13 26**
**60048 Frankfurt am Main (DE)**

(56) Entgegenhaltungen:
**EP-A- 0 838 293 EP-A- 0 844 077**

- **DATABASE WPI Section Ch, Week 199503 Derwent Publications Ltd., London, GB; Class A17, AN 1995-018840 XP002266761 & JP 06 305100 A (SUMITOMO BAKELITE CO LTD), 1. November 1994 (1994-11-01)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 531 987 B1

## Beschreibung

Die Erfindung betrifft eine Polyolefin-Mehrschichtfolie aus mindestens drei Schichten, enthaltend a) eine als Basisschicht fungierende Kernschicht A aus mindestens einem amorphen Polyolefin oder einer Mischung mindestens eines teilkristallinen Polyolefins und 5,0 oder mehr Gew.% mindestens eines amorphen Polyolefins und b) zwei beidseitigen Deckschichten B und C, die gleich oder verschieden sind, aus einem Polyolefin (Polyethylen, Polypropylen) und/oder einer Mischung aus Polypropylen und einem amorphen Polyolefin. Die Folien gemäß der Erfindung besitzen eine sehr gute Thermoformbarkeit bei gleichzeitig geringem Schrumpf. Aufgrund des chemischen Aufbaus der Kernschicht A resultiert eine außerordentlich geringe Wasseraufnahme und eine überragende Sperrwirkung gegen Wasserdampf. Die Erfindung betrifft ferner ein Verfahren zur Herstellung dieser Folie sowie ihre Verwendung.

Folien, welche für die Tiefziehanwendung benutzt werden sollen, müssen gewissen Eigenschaften hinsichtlich der Verarbeitbarkeit auf den Verpackungsmaschinen sowie ihrer Barriereeigenschaften gegenüber atmosphärischen Gasen wie Sauerstoff sowie einer hohen Sperrwirkung gegenüber Wasserdampf genügen. Ferner ist aus Gründen der Verarbeitbarkeit und Maschinengängigkeit eine hohe Steifigkeit einer Folie für die Thermoformbarkeit, insbesondere für Tiefziehanwendung, gefordert. Dahingehend sollte die Folie nach dem Tiefziehen keine Dick- oder Dünnstellen in ihrem Profil aufweisen, da diese in der Regel zu einer Minderung der Sperrwirkung gegenüber Gasen und Wasserdampf führen kann. Bei Blisterfollenstrukturen ist diese Anforderung besonders am Übergang, d.h. an den Ecken zwischen Boden und Seite des Blisters zu beachten. Hierbei kann bereits eine geringfügige Änderung der Wanddicke einen deutlichen Einfluß auf die Barrierewirkung haben.

Diese von der Endanwendung aufgestellten Forderungen können in der Regel kaum oder gar nicht von Homopolymeren allein oder von Polymerblends hinreichend gut erfüllt werden, da keiner der derzeit vorhandenen Kunststoffe allein alle geforderten Eigenschaften in sich so vereint. Dadurch ist es nicht möglich, mit nur einem einzigen Material eine technische oder wirtschaftliche Lösung zu erreichen. So können Materialien mit z. B. guter Gasbarriere eine ungenügende Wasserdampfbarriere besitzen, beispielsweise EVOH-haltige Folien, und müssen sogar zusätzlich geschützt werden, da diese Materialien hygroskopisch sind und im feuchten Zustand nicht die gewünschte Barrierewirkung gegenüber Sauerstoff entwickeln können. Andere Polymere wie Polyamid erreichen in Folien die erwünschten Eigenschaften nicht oder erst ab einer gewissen Schichtdicke, um beispielsweise die geforderten Barrierewerte einer Folie zu erfüllen. Nach dem Stand der Technik wird dieses Problem in der Regel durch verschiedenartige Verbünde von mehrschichtigen Folien gelöst.

Ferner wird an Folien, die im Verpackungsbereich Anwendung finden, häufig die Forderung nach Siegelfähigkeit bei niedriger Siegelanspringtemperatur gestellt, damit sie sich auf Verpackungsmaschinen wirtschaftlich verarbeiten lassen.

Mehrschichtfolien, insbesondere Dreischichtfolien, bei denen die mittlere Basisschicht aus amorphem Polyolefin oder einem Gemisch aus amorphem Polyolefin und Polyolefinen besteht, sind bekannt. Die beidseitigen Deckschichten können aus LDPE (DE 198 28 867, TICONA), unorientiertem PP (DE 198 28 857, TICONA), kristallisiertem Polyolefin (EP 0631864, TASAI) oder einer Mischung aus PP und einem Ethylen/α-Olefin-Copolymer (EP0920989, Mitsui) bestehen. Die Verbindung der Schichten erfolgt durch Coextrusion oder mit Hilfe einer adhäsiven Schicht. Nachteilig bei der Anwendung dieser Folien ist, daß das Verarbeitungsfenster zu eng ist, d.h. die Glasübergangstemperatur ($T_g$) der Basisschicht ist nicht auf das Deckschichtmaterial abgestimmt. Dadurch läßt sich letzteres nicht optimal mitverstrecken und eine Anwendung einer dreischichtigen Folie, beispielsweise als Pharma-Blister-Folie, ist eingeschränkt oder mißlingt. JP-A-06305100 beschreibt eine mehrschichtige Folie, die eine Basisschicht aus COC und zwei auf der Basisschicht aufgebrachten Deckschichten aus einer Mischung aus MDPE und COC aufweist.

Aufgabe der vorliegenden Erfindung ist, die Nachteile des Standes der Technik-zu vermeiden.
Gegenstand der Erfindung ist eine Polyolefin-Mehrschichtfolie aus mindestens drei Schichten, enthaltend 1) a) eine als Basisschicht fungierende Kernschicht A aus mindestens einem amorphen Polyolefin und b) zwei beidseitigen Deckschichten B und C aus einer Mischung aus Polypropylen und mindestens einem amorphen Polyolefin oder II) a) eine Kernschicht A aus einer Mischung mindestens eines teilkristallinen Polyolefins und 5,0 Gew.-% oder mehr mindestens eines amorphen Polyolefins und b) zwei Deckschichten B und C, die gleich oder verschieden sind, aus einem teilkristallinen Polyolefin und/oder einer Mischung aus Polypropylen und mindestens einem amorphen Polyolefin. Die Erfindung betrifft ferner ein Verfahren zur Herstellung dieser Folie sowie ihre Verwendung.

Amorphe Polyolefine im Sinne der Erfindung sind Cycloolefincopolymere (COC) und cycloolefinische Polymere (COP), einzeln oder als Mischung. Geeignete Cycloolefincopolymere sind an sich bekannt und werden in EP-A-0 407 870, EP-A-0 485 893, EP-A-0 503 422 und DE-A-40 36 264 beschrieben.

Die eingesetzten Cycloolefincopolymere sind aus einem oder mehreren Cycloolefinen aufgebaut, wobei als Cycloolefine im allgemeinen substituierte und unsubstituierte Cycloalkene und/oder Polycycloalkene, beispielsweise Bi-, Tri- oder Tetracycloalkene eingesetzt werden. Die Cycloolefincopolymere können auch verzweigt sein. Derartige Produkte können-Kamm- oder Sternstruktur aufweisen. Vorteilhaft sind Copolymere aus Ethylen und/oder einem α-Polyolefin mit einem oder mehreren cyclischen, bicyclischen und/oder polycyclischen Olefinen. Besonders vorteilhaft

ist das amorphe Polyolefin von mindestens einem der cyclischen oder polycyclischen Olefine der folgenden Formeln I, II, II', III, IV, V, VI

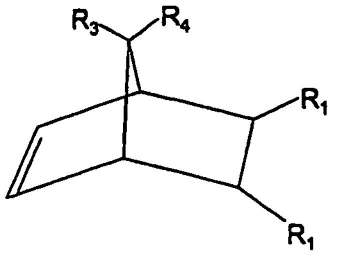

(I)

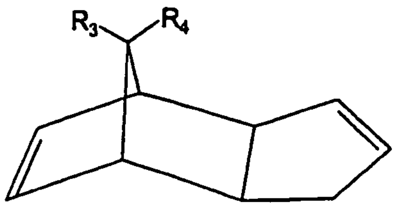

(II)

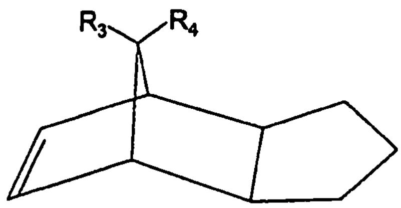

(II')

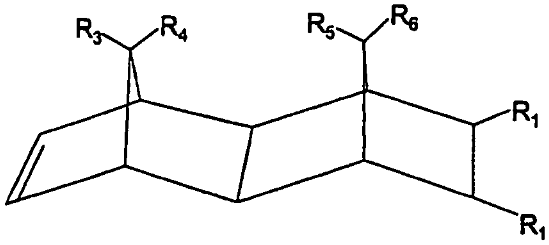

(III)

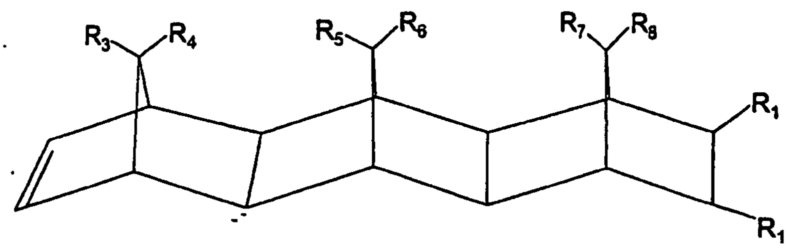

(IV)

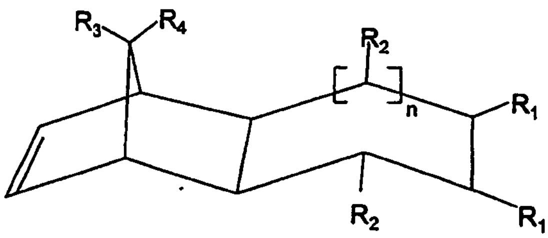

(V)

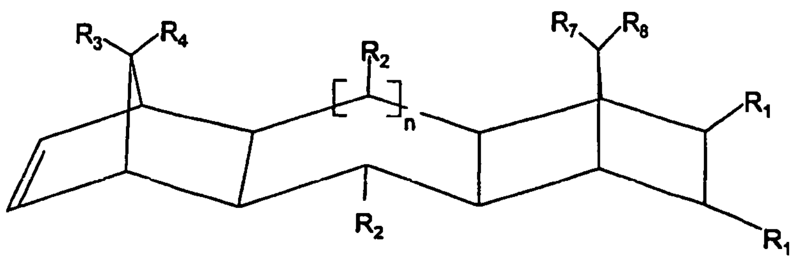

(VI)

worin $R^1$, $R^2$, $R^3$, $R^4$, $R^5$, $R^6$, $R^7$ und $R^8$ gleich oder verschieden sind und ein Wasserstoffatom oder einen $C_1$-$C_{20}$-Kohlenwasserstoffrest, wie einen linearen oder verzweigten $C_1$-$C_8$-Alkylrest, $C_6$-$C1_8$-Arylrest, $C_7$-$C_{20}$-Alkylenarylrest, einen cyclischen oder acyclischen $C_2$-$C_{20}$-Alkenylrest bedeuten, oder einen gesättigten, ungesättigten oder aromatischen Ring bilden, wobei gleiche Reste $R^1$ bis $R^8$ in den verschiedenen Formeln I bis VI eine unterschiedliche Bedeutung haben können, worin n Werte von 0 bis 5 annehmen kann, und
0 bis 99,9 Gew.-%, vorzugsweise 0,1 bis 99,9 Gew.-%, bezogen auf die Gesamtmasse des Cycloolefincopolymers, polymerisierte Einheiten, welche sich ableiten von einem oder mehreren acyclischen Olefinen der Formel VII

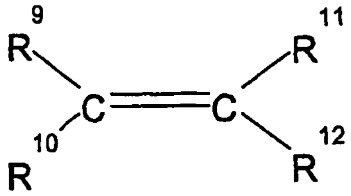

(VII)

worin $R^9$, $R^{10}$, $R^{11}$ und $R^{12}$ gleich oder verschieden sind und ein Wasserstoffatom, einen linearen, verzweigten, gesättigten oder ungesättigten $C_1$-$C_{20}$-Kohlenwasserstoffrest wie einen $C_1$-$C_8$-Alkylrest oder einen $C_6$-$C_{18}$-Arylrest bedeuten.

Außerdem können die verwendeten Cycloolefincopolymere 0 bis 45 Gew.-%, bezogen auf die Gesamtmasse des Cycloolefincopolymers, polymerisierte Einheiten enthalten, welche sich ableiten von einem oder mehreren monocyclischen Olefinen der Formel VIII

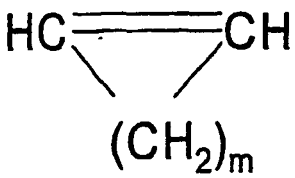

(VIII)

worin m eine Zahl von 2 bis 10 ist.

Bei den cyclischen Olefinen sind ebenfalls Derivate dieser cyclischen Olefine mit polaren Gruppen, wie Halogen-, Hydroxyl-, Ester-, Alkoxy-, Carboxy-, Cyano-, Amido-, Imido- oder Silylgruppen, eingeschlossen.

Bevorzugt im Sinne der Erfindung sind Cycloolefincopolymere, die polymerisierte Einheiten enthalten, welche sich ableiten von polycyclischen Olefinen der Formeln I oder III, und polymerisierte Einheiten, welche sich ableiten von acyclischen Olefinen der Formel VII, insbesondere Olefine mit Norbornengrundstruktur wie Norbornen und Tetracyclododecen und gegebenenfalls Vinylnorbornen oder Norbomadien. Bevorzugt sind auch Cycloolefincopolymere mit polymerisierten Einheiten, abgeleitet von acyclischen Olefinen mit endständigen Doppelbindungen wie $\alpha$-Olefine mit 2 bis 20 C-Atomen, insbesondere Ethylen oder Propylen, beispielsweise Norbomen/ Ethylen- und Tetracyclododecen/ Ethylen-Copolymere.

Als Terpolymere sind bevorzugt Norbornen/Vinylnorbonen/ Ethylen-, Norbornen/Norbornadien/Ethylen-, Tetracyclododecen/Vinylnorbomen/ Ethylen-, Tetracyclödodecen/Vinyltetracyclododecen/Ethylen- oder Norbomen/ Dicyclopentadien/Ethylen-Terpolymere.

Ganz besonders vorteilhaft ist als amorphes Polyolefin ein Copolymer aus Ethylen und Norbomen einsetzbar.

Bei der Verarbeitung der Folie gemäß der Erfindung hat sich gezeigt, daß hierbei ein Kompromiß zwischen ihrer Verformbarkeit und der Barrierewirkung eingegangen werden muß. So besitzt beispielsweise eine Folie mit einem amorphen Polyolefin, das eine hohe $T_g$ aufweist, eine schlechtere Barrierewirkung als eine Folie mit einem amorphen Polyolefin mit niedriger $T_g$. Sie läßt sich aber gleichmäßiger zum Blister ausformen, so daß sich insgesamt ein besseres Verarbeitungsbild und ein breiteres Verarbeitungsfenster auf den entsprechenden Verarbeitungsmaschinen ergibt. Dies gilt insbesondere dann, wenn die z.B. Polypropylen enthaltenden Deckschichten im Verhältnis zur Gesamtstärke der Folie dick sind, beispielsweise $\geq 30\ \mu m$ bei einer Folienstärke von 200 bis 400 $\mu m$.

Die Verarbeitungstemperatur der Folie wird also bestimmt durch das Material der Deckschichten. Das Material der Kernschicht A in Bezug auf seine $T_g$ wird wiederum ausgewählt in Abhängigkeit von der Dicke der Deckschichten, d.h. dünne Deckschichten erlauben ein Material mit niedriger $T_g$ und dicke Deckschichten ein Material mit höherer $T_g$. Diese Aussage läßt sich in einer empirischen Gleichung ausdrücken:

$$Tg_{(A)} \geq \text{Summe der Polyolefin-Schichten (Absolutwert)} / 2 + 65 \text{ (empirische Größe)}$$

Die Kernschicht A kann reines COC und Blends aus COC hoher und niederer $T_g$, gegebenfalls in Mischung mit Polyolefinen enthalten.

Durch eine Kombination von verschiedenen Polymeren in einem Verbund gemäß der Erfindung, der durch Coextrusion oder Lamination erreicht wird, werden die Eigenschaftsprofile der verschiedenen polymeren Werkstoffe positiv miteinander vereinigt. Die additiven Folienlagen gewährleisten sowohl die nötige Wasserdampfbarriere als auch die Flexibilität und die Durchstoßfestigkeit des Folienverbundes, und zwar bei gleichzeitig hoher Transparenz und guter Thermoformbarkeit. Es werden aber nicht nur die Eigenschaften verbessert, sondern es wird auch eine Reduktion der additiven Dicke des gesamten Folienaufbaues erzielt, um entweder bei gegebener Foliendicke eine wesentliche Steigerung der Barrierewirkung gegenüber Wasserdampf zu erhalten oder bei gegebenen Eigenschaftsprofilen eine deutliche Reduktion der Schichtdicke und damit eine Kostenersparnis herbeizuführen.

Es ist überraschend, daß durch Beimischung geringer Anteile mindestens eines amorphen Polyolefins, insbesondere COC und COP, die Eigenschaften von Folien aus einem teilkristallinen Polyolefin, insbesondere Polyethylen, deutlich verbessert werden, z.B. die Stanzbarkeit der Folie aufgrund der mechanischen Steifigkeit des eingesetzten amorphen Polyolefins sowie eine Vermeidung der Fadenbildung an der Schnittkante des Blisters.

In einer Ausgestaltung der vorliegenden Erfindung enthält die Kunststoff-Mehrschichtfolie Außenschichten, die einen Blend aus mindestens einem teilkristallinen Polyolefin und mindestens einem amorphen Polyolefin enthalten. Zwischen den beiden Außenschichten befindet sich vorteilhaft mindestens eine die Haftung verbessernde Schicht.

Die Folie gemäß der Erfindung zeichnet sich durch eine Kombination der folgenden Eigenschaften aus:

gleichmäßigere Wanddickenverteilung nach dem Thermoformen
sehr gute Thermoformbarkeit
geringer Schrumpf nach dem Thermoverformen
ungewöhnlich gute Durchstoßfestigkeit bei statischer und/oder dynamischer Belastung
gute Barriereeigenschaften gegenüber Wasserdampf
keine Veränderung der mechanischen Eigenschaften durch Feuchtigkeitsaufnahme.

Ein wichtiges Merkmal der Kernschicht A ist ihre geringe Reißdehnung.

Der Schrumpf läßt sich darüberhinaus merklich reduzieren, wenn eine Mischung verschiedener amorpher Polyolefine für die Kernschicht A eingesetzt wird. Bei Verwendung derartiger Mischungen läßt sich außerdem die Dicke der Schicht A in weiten Grenzen variieren.

Nach Analyse von vorhandenen Folienstrukturen bezüglich der Anforderungen an die Verpackung lassen sich Schichtaufbauten konzipieren, in welchen vorhandene Lagenmaterialien durch COC ersetzt bzw. modifiziert und zusätzlich auch Dickenreduzierungen möglich werden. Diese Vorgehensweise bringt bezüglich der Barriereeigenschaften den gewünschten Erfolg. Überraschenderweise macht sich die hohe Steifigkeit des COC-Materials (hoher E-Modul) im Schichtaufbau, hinsichtlich der Gesamtflexibilität der Folie nicht nachteilig bemerkbar und erhöht zusätzlich die Thermoverformbarkeit und Durchstoßfestigkeit. Es lassen sich somit auch die gewünschten Eigenschaften z. B. hohe mechanische Steifigkeit bei gegebener Gesamtflexibilität des Folienverbundes, eine gute Siegelfähigkeit der Folie und hohe Wasserdampfbarriere in einer mit einem amorphen Polyolefin modifizierten Außenschicht der Folie erreichen.

Die Innenschicht(en) und die Außenschichten sind entweder durch direkte Koextrusion miteinander oder mittels einer haftvermittelnden Schicht, die sich zwischen der/den Innenschicht/en und den / der Außenschicht/en befinden / befindet, verbunden.

Bei diesen Verfahren kann zwischen zwei benachbarten Schichten eine weitere Schicht eingesetzt werden, die die Aufgabe hat, die Haftung zwischen den zwei erstgenannten Schichten zu verbessern.

Die Kernschicht A enthält entweder ein amorphes Polyolefin oder eine Mischung aus mindestens einem teilkristallinen Polyolefin und mindestens einem amorphen Polyolefin. Die Mischung kann sowohl in der Kernschicht A als auch in den Deckschichten B und C enthalten sein. Der Anteil an amorphen Polyolefin beträgt dabei in der Kernschicht A$\geq$ 5,0 Gew.-%, vorzugsweise 10 Gew.% bis 50 Gew.-%, insbesondere 15 Gew.% bis 40 Gew.-%. In den Deckschichten B und C kann der Anteil an amorphen Polyolefin bis auf 1,0 Gew.-% gesenkt werden.

Die Dicke der Kernschicht A beträgt im allgemeinen $\geq 5\ \mu m$, vorzugsweise $\geq 10 \mu m$ und insbesondere $\geq 15\ \mu m$.

Die Mehrschichtfolie gemäß der Erfindung weist im allgemeinen eine Stärke von 50 bis 350 $\mu m$, vorzugsweise 75 bis 275 $\mu m$ auf. Dabei betragen die Schichtdicken der Deckschichten 2,5 bis 90 % des gesamten Aufbaus.

Die Außenschicht kann mineralische Zusätze enthalten. Übliche mineralische Zusätze sind Materialien wie Aluminiumoxid, Aluminiumsulfat, Bariumsulfat, Calciumcarbonat, Magnesiumcarbonat, Silikate wie Aluminiumsilikat (Kaolinton) und Magnesiumsilikat (Talkum), Siliciumdioxid und Titandioxid, worunter Weißpigmente wie Calciumcarbonat, Siliciumdioxid, Titandioxid und Bariumsulfat bevorzugt eingesetzt werden. Die Titandioxidteilchen bestehen zu mindestens 95 Gew.% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird.

Zu den besonders geeigneten anorganischen Oxiden gehören die Oxide von Aluminium, Silizium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt.

$TiO_2$-Partikel mit einem Überzug werden z. B. in der EP-A-0 078 633 und EP-A-0 044 515 beschrieben.

Neben diesen mineralischen Zusätzen kann die Mehrschichtfolie in einer oder mehreren Außenschichten zusätzlich Neutralisationsmittel, Stabilisatoren, Gleitmittel, Kohlenwasserstoffharze und/oder Antistatika enthalten. Die nachstehenden Angaben in Gewichtsprozent beziehen sich auf das Gewicht der jeweiligen Schicht, der das Additiv zugesetzt ist. Neutralisationsmittel sind vorzugsweise Dihydrotalcit, Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 $m^2$/g. Im allgemeinen wird das Neutralisationsmittel in einer Menge von 0,02 bis 0,1 Gew.-% zugesetzt.

Als Stabilisatoren können die üblichen stabilisierend wirkenden Verbindungen für Ethylen-, Propylen- und andere alpha-Olefinpolymere eingesetzt werden. Deren Zusatzmenge liegt zwischen 0,05 und 2,0 Gew.%. Besonders geeignet sind phenolische Stabilisatoren, Alkali-/Erdalkalistearate und/oderAlkali-/Erdalkalicarbonate. Phenolische Stabilisatoren werden in einer Menge von 0,1 bis 0,6 Gew.-%, vorzugsweise 0,15 bis 0,3 Gew.%, und mit einer Molmasse von mehr als 500 g/mol bevorzugt. Pentaerythrityl-tetrakis-3-(3,5-di-tertiärbutyl-4-hydroxyphenyl)-propionat oder 1,3,5-Trimethyl-2,4,6-tris(3,5-di-tertiärbutyl-4-hydroxybenzyl)benzol sind besonders vorteilhaft.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3,0 Gew.-%. Besonders geeignet ist der Zusatz von höheren aliphatischen Säureamiden im Bereich von 0,15 bis 0,25 Gew.-% in Basisschichten und/oder Außenschichten.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\alpha$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3,0 Gew.-%. Als Antistatikum ist weiterhin Glycerinmonostearat bevorzugt.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorgariohydrogensiloxane wie Polydimethylsiloxan und Polymethylhydrogensiloxan.

Der Überzug auf den $TiO_2$-Teilch besteht gewöhnlich aus 1,0 bis 12,0 g, vorzugsweise 2,0 bis 6,0 g, anorganischer Oxide, gegebenenfalls sind zusätzlich 0,5 bis 3,0 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Durch Zusatz solcher Substanzen in ausreichenden Mengen kann die Folie auch in einer weißen bzw. opaken Ausführungsform hergestellt werden.

Als teilkristallines Polyolefin können im allgemeinen Polymere aus Ethylen oder $\alpha$-Olefinen wie Propen, n-Buten, iso-Buten und höheren $\alpha$-Olefinen oder deren Copolymere eingesetzt werden. Vorteilhaft verwendbar sind Polypropylen, Polyethylene wie HDPE, LDPE und LLDPE sowie daraus hergestellte Mischungen. Bevorzugt sind Mischungen von LDPE und LLDPE in einem freien Mischungsverhältnis von 5 bis 100 %. Das teilkristalline Polyolefin enthält gegebenenfalls weitere zugesetzte Additive in jeweils wirksamen Mengen.

Isotaktisches Polypropylenhomopolymer mit einem ataktischen Anteil von 15 Gew.-% und weniger, Copolymere von Polyethylen und Polypropylen mit einem Ethylengehalt von 10 Gew.-% oder weniger, Copolymere von Propylen mit $C_4$-$C_8$-alpha-Olefinen mit einem alpha-Olefingehalt von 10 Gew.% oder weniger, Terpolymere von Propylen, Ethylen und Butylen mit einem Ethylengehalt von 10 Gew.-% oder weniger und mit einem Butylengehalt von 15 Gew.-% oder weniger sind ebenfalls geeignet. Die angegebenen Gewichtsprozente beziehen sich auf das jeweilige Polymere.

Unter amorphen Polyolefinen werden solche Polyolefine verstanden, welche trotz einer regellosen Anordnung der Molekülketten bei Raumtemperatur Feststoffe sind. Besonders geeignet sind amorphe Polyolefine, deren $T_g$ im Bereich von 60 bis 300°C, vorzugsweise 70 bis 250°C, insbesondere 80 bis 200°C liegt oder deren Vicat-Erweichungstemperatur $T_v$ (VST/B/120) im Bereich von 70 bis 200°C, vorzugsweise von 80 bis 180°C, liegt. Im allgemeinen hat das amorphe Polyolefin ein mittleres Molekulargewicht Mw im Bereich von 1.000 bis 500.000, vorzugsweise 1.500 bis 250.000, insbesondere 3.000 bis 150.000. Der Brechungsindex liegt im allgemeinen im Bereich von 1,3 bis 1,7, vorzugsweise 1,4 bis 1,6. Dabei ist es besonders vorteilhaft, wenn der Brechungsindex des amorphen Polyolefins in einem bestimmten Verhältnis zum Brechungsindex des Polyolefins der Deckschicht steht. Im allgemeinen unterscheiden sich die Brechungsindices von amorphem Polyolefin und dem Polyolefin der Deckschicht maximal um 0,1 Einheiten, vorzugsweise um maximal 0,05 Einheiten. Hierdurch erreicht die Außenschicht eine hohe Transparenz.

Die Herstellung der. Cycloolefinpolymeren erfolgt im allgemeinen mit Hilfe von Übergangsmetallkatalysatoren, die in den vorstehend genannten Schriften beschrieben sind. Darunter sind die Herstellverfahren gemäß EP-A-0 407 870 und EP-A-O 485 893 bevorzugt, da diese Verfahren Cycloolefinpolymere mit einer engen Molekulargewichtsverteilung (Mw/Mn = 2) liefern. Dadurch werden die Nachteile wie Migration, Extrahierbarkeit oder Klebrigkeit der bzw. durch die niedermolekularen Bestandteile vermieden. Die Regulierung des Molekulargewichts erfolgt bei der Herstellung durch den Einsatz von Wasserstoff, eine gezielte Auswahl des Katalysators und der Reaktionsbedingungen.

Es gibt Ausführungsformen, welche auf beiden Seiten der Kernschicht, enthaltend ein amorphes Polyolefin oder eine Mischung aus mindestens einem teilkristallinen Polyolefin und mindestens einem amorphen Polyolefin, und den beidseitigen Deckschichten mindestens eine weitere Schicht aufweisen. Bei mehr als einer weiteren Schicht können diese weiteren Schichten bezüglich ihrer Dicke und Zusammensetzung gleich oder verschieden sein. Diese zusätzlichen Schichten können die Haftung verbessernde Schichten aufweisen.

Die die Haftung verbessernde Schicht enthält im allgemeinen mindestens ein oder mehrere Polymere. Vorteilhaft einsetzbar sind hierfür beispielsweise Polymere des Ethylens oder von $\alpha$-Olefinen oder deren Copolymere, wie Low-Density Polyethylen (LDPE), Linear-Low-Density Polyethylen (LLDPE), Polypropylen.

Diese Polyolefine können auch modifiziert sein. Dieses modifizierte Polyolefin kann vorteilhaft in der die Haftung verbessernden Schicht enthalten sein und enthält mindestens eine der folgenden Gruppen wie Carboxyl-, Carboxylanhydrid-, Metallcarboxylat-, Carboxylester-, Imino-, Amino- oder Epoxygruppe mit 1 Gew.-% bis 50 Gew.-%, bezogen auf den Gesamtanteil des modifizierten Polyolefin-Kunststoffes. Beispiele für den modifizierten Polyolefin-Kunststoff umfassen modifizierte Polyolefin Copolymere oder gepfropfte Copolymere, die hergestellt werden, indem chemisch folgende beispielhaft aufgeführte Verbindungen, wie Maleinsäureanhydrid, Fumarsäureanhydrid, Zitronensäureanhydrid, N-Phenylmaleimid, N-Cyclohexylmaleinimid, Glycidylacrylat, Glycidylmethacrylat, Glycidylvinylbenzoat, N-[4-(2,3-epoxpropoxy)-3,5-dimethylbenzyl]acrylamid (AXE), Alkylmethacrylate und/oder Derivate davon in Polyolefine, wie Polypropylen, Polyethylen oder Ethylen/Propylen-Copolymere und in Polyamid gepfropfte Polyolefine eingeführt werden. Das modifizierte Polyolefin ist im Polymerisationsgrad nicht beschränkt, es kann auch ein Oligomersein. Besonders bevorzugte modifizierte Polyolefine sind
Maleinsäureanhydrid-modifiziertes Polyethylen,
Maleinsäureanhydrid-modifiziertes Polypropylen,
Maleinsäureanhydrid-modifiziertes Polyethylen/Polypropylen-Copolymer,
Fumarsäureanhydrid-modifiziertes Polyethylen,
Fumarsäureanhydrid-modifiziertes Polypropylen,
Fumarsäureanhydrid-modifiziertes Polyethylen/Polypropylen-Copolymer,
Glycidylmethacrylat-modifiziertes Polyethylen,
Glycidylmethacrylat-modifiziertes Polypropylen,
AXE-modifiziertes Polyethylen.

Weiter einsetzbar sind Copolymere des Ethylens mit ungesättigten Estern, beispielsweise Vinylacetat, oder (Meth)acrylsäureester wie Ethylmethacrylat, sowie Copolymere des Ethylens mit Vinylalkohol.

Die die Haftung verbessernde Schicht kann auch Polyamid enthalten, vorzugsweise Polyamid 6, Polyamid 11, Polyamid 12, Polyamid 66, Polyamid 610, Polyamid 612.

Diese Polymere können einzeln oder als Mischungen eingesetzt werden.

Die die Haftung verbessernde Schicht kann vorteilhaft in der Schmelze aufgebracht werden oder aber als Lösung, Suspension oder lösemittelhaltiger Klebstoff.

Die Erfindung betrifft auch ein Verfahren zur Herstellung der Folie gemäß der Erfindung, bei dem die die Folie bildenden Polymeren und/oder Polymermischungen in einem Extruder aufgeschmolzen, anschließend die Schmelze/n durch eine Flachdüse extrudiert werden, die so erhaltene Folie auf einer oder mehreren Walzen abgezogen wird, wobei sie abkühlt und sich verfestigt, und dann die Folie gegebenenfalls in bekannter Weise gereckt und/oder thermofixiert und/oder oberflächenbehandelt wird.

Die aus dem Extruder austretende Schmelze/n können auch durch eine Ringdüse extrudiert werden, wobei die so erhaltene Folie, auf einer Blasfolienanlage zur Folie verarbeitet, über Walzen flachgelegt und die Folie gegebenenfalls thermofixiert und/oder oberflächenbehandelt wird.

Die gegebenenfalls zugesetzten Additive können bereits im Polymer bzw. in der Polymermischung enthalten sein oder via Masterbatch-Technik zugegeben werden.

Es kann anschließend eine Thermofixierung (Wärmebehandlung) durchgeführt werden, wobei die Folie etwa 0,5 bis 10 s lang bei einer Temperatur von 100 bis 160°C gehalten wird. Anschließend wird die Folie in üblicher Weise mit einer Aufwickeleinrichtung aufgewickelt.

Die Abzugswalze oder -walzen, durch die die ausgepreßte Folie auch abgekühlt und verfestigt wird, wird meist auf einer Temperatur von 20 bis 90°C gehalten.

Gegebenenfalls kann/können eine oder beide Oberfläche/n der Folie nach einer der bekannten Methoden

korona- oder flammbehandelt werden.

Das amorphe Polyolefin wird entweder als reines Granulat oder als granuliertes Konzentrat (Masterbatch) mit dem teilkristallinen Polyolefin eingesetzt. Die Komponenten werden vermischt und eingearbeitet, indem das teilkristalline Polyolefingranulat oder -pulver vorteilhaft mit dem amorphen Polyolefin vorgemischt und anschließend dem Extruder zugeführt wird. Im Extruder werden die Komponenten weiter vermischt und auf Verarbeitungstemperatur erwärmt. Es wurde gefunden, daß die Gleiteigenschaften und die Optik der Folie auch von den Extrusionsbedingungen (Temperatur, Scherung) abhängen. Überraschenderweise lassen sich unter sonst gleichen Bedingungen bezüglich der Rohstoffe und Streckverfahren die Gleiteigenschaften und die Optik der Folie über die Bedingungen im Extruder variieren. Dabei ist es für das Verfahren zur Herstellung der Folie gemäß der Erfindung günstig, daß die Extrusionstemperatur für die Deckschicht/en oberhalb der Glasübergangstemperatur/Vicat-Erweichungstemperatur ($T_g$ bzw. $T_v$) des amorphen Polymeren liegt. Im allgemeinen liegt die Extrusionstemperatur für die Deckschicht/en mindestens 10°C, vorzugsweise 15 bis 180°C, insbesondere 20 bis 150°C, über der $T_g$ bzw. der $T_v$ des amorphen Polymeren.

Die Folie gemäß der Erfindung eignet sich aufgrund ihrer Eigenschaften, - sehr gute Thermoformbarkeit, geringer Schrumpf und gleichmäßigere Wanddickenverteilung nach dem Thermoformen und ungewöhnlich gute Durchstoßfestigkeit bei statischer und/oder dynamischer Belastung - hervorragend als thermoplastische Verpackungsfolie, vorzugsweise als Blisterfolie. Weiterhin kann sie wegen ihren guten Barriereeigenschaften gegenüber Wasserdampf, wobei keine Veränderung der mechanischen Eigenschaften durch Feuchtigkeitsaufnahme auftritt, auf den Gebieten verwendet werden, in denen sie mit Nahrungsmitteln in Berührung kommt, beispielsweise in der Verpackungsindustrie als Tiefziehfolie in Tiefziehverpackungen z.B. für verderbliche Lebensmittel wie Fisch-, Fleisch-, Geflügel- und Wurstwaren und für Pharma-Blister-Verpackungen. Trotz einer besseren Wanddickenverteilung und einer dadurch resultierenden höheren Wandstärke lassen sich im Blister verpackte Gegenstände leicht und ohne größeren Kraftaufwand herausdrücken.

Die Folien können außerdem zur Herstellung eines laminierten Gegenstandes verwendet werden, bei dem die Folien gemäß der Erfindung zusammen mit Papier und/oder Pappe und/oder einer oder mehreren Metallfolien und/oder weiteren Folien aus thermoplastischen Kunststoff verarbeitet werden.

Beispiele

Es wurden Verbundfolien nach dem bekannten Coextrusionsverfahren unter Einsatz einer Flachdüse mit einer Gesamtstärke von 220 bis 250 µm aus drei Schichten hergestellt, die eine Kernschicht A und zwei Deckschichten B und C aufwiesen. Die einzelnen Schichten besaßen die in den Tabellen der Beispiele angeführten Dicken. Für die Kernschicht A wurden thermoplastische Olefin-Polymere amorpher Struktur (COC) auf Basis Ethylen und Norbomen der Firma Ticona, Deutschland eingesetzt (®Topas Typ 8007 und Typ 6013), $T_g$ 80°C beziehungsweise 140°C. Als teilkristallines Polyolefin wurde Polypropylen (Dichte von 0,91g/$cm^3$) verwandt.

Aus den Verbundfolien wurden in bekannter Weise Blister geformt und die Wandstärken am Übergang, d.h. an einer Ecke zwischen Boden und Seite des Blisters gemessen.

Als Vergleich wurden Verbundfolien eingesetzt, die in den Deckschichten reines Polypropylen enthielten. Die Mischungsverhältnisse und die erhaltenen Ergebnisse sind in den Tabellen 1 bis 3 angeführt.

Tabelle 1

| Beispiel | Deckschichten B und C (60 µm) | Kernschicht A (100 µm) | Wanddicke (µm) |
|---|---|---|---|
| 1 | 95 % PP + 5 % COC 8007 | COC 8007 | 63 |
| 2 | 95 % PP + 5 % COC (60 % COC 8007 und 40 % COC 6013) | 60 % COC 8007 + 40 % COC 6013 | 72 |
| 3 | 95 % PP + 5 % COC (35 % COC 8007 und 65 % COC 6013) | 35 % COC 8007 + 65 % COC 6013 | 112 |
| V1 | PP | COC 8007 | 61 |
| V2 | PP | 60 % COC 8007 + 40 % COC 6013 | 71 |
| V3 | PP | 35 % COC 8007 + 65 % COC 6013 | 110 |
| PP = reines Polypropylen<br>COC = thermoplastische Olefin-Polymere amorpher Struktur | | | |

Tabelle 2

| Beispiel | Deckschichten B und C (50 μm) | Kernschicht A (130 μm) | Wanddicke (μm) |
|---|---|---|---|
| 4 | 95 % PP + 5 % COC 8007 | COC 8007 | 67 |
| 5 | 95 % PP + 5 % COC (60 % COC 8007 und 40 % COC 6013) | 60 % COC 8007 + 40 % COC 6013 | 76 |
| V4 | PP | COC 8007 | 65 |
| V5 | PP | 60 % COC 8007 + 40 % COC 6013 | 74 |

Tabelle 3

| Beispiel | Deckschichten B und C (30 μm) | Kernschicht A (190 μm) | Wanddicke (μm) |
|---|---|---|---|
| 6 | 95 % PP + 5 % COC 8007 | COC 8007 | 74 |
| 7 | 95 % PP + 5 % COC (60 % COC 8007 und 40 % COC 6013) | 60 % COC 8007 + 40 % COC 6013 | 83 |
| 8 | 95.% PP + 5 % COC (35 % COC 8007 und 65 % COC 6013) | 35 % COC 8007 + 65 % COC 6013 | 82 |
| V6 | PP | COC 8007 | 72 |
| V7 | PP | 60 % COC 8007 + 40 % COC 6013 | 80 |
| V8 | PP | 35 % COC 8007 + 65 % COC 6013 | 80 |

Aus den Ergebnissen ist zu entnehmen, daß bereits eine Zugabe von 5 % COC zu dem teilkristallinen Polyolefin der Deckschichten eine merkliche Erhöhung der Wandstärke im Schulterbereich des Blisters bewirkt. Eine höhere Wandstärke bedeutet aber auch eine bessere Barrierewirkung gegenüber atmosphärischen Gasen sowie eine höhere Sperrwirkung gegenüber Wasserdampf. Eine Erhöhung der Schichtdicke der Kernschicht A bewirkt außerdem auch eine Erhöhung der Wandstärke im Schulterbereich des Blisters. Diese wird ebenfalls erhöht beim Einsatz eines Gemisches zweier COC 's in der Folie, abhängig von ihrem eingesetzten Verhältnis.

**Patentansprüche**

1. Polyolefin-Mehrschichtfolie aus mindestens drei Schichten, enthaltend 1) a) eine als Basisschicht fungierende Kernschicht A aus mindestens einem amorphen Polyolefin und b) zwei beidseitigen Deckschichten B und C aus einer Mischung aus Polypropylen und mindestens einem amorphen Polyolefin oder II) a) eine Kernschicht A aus einer Mischung mindestens eines teilkristallinen Polyolefins und 5,0 Gew.% oder mehr mindestens eines amorphen Polyolefins und b) zwei Deckschichten B und C, die gleich oder verschieden sind, aus einem teilkristallinen Polyolefin und/oder einer Mischung aus Polypropylen und mindestens einem amorphen Polyolefin.

2. Folie nach Anspruch 1, **dadurch gekennzeichnet, daß** das amorphe Polyolefin ein Cycloolefincopolymer und/oder ein cycloolefinisches Polymer ist.

3. Folie nach Anspruch 1 oder 2 **dadurch gekennzeichnet, daß** das amorphe Polyolefin ein Copolymer aus Ethylen und/oder einem α-Olefin und einem cyclischen, bicyclischen oder polycyclischen Olefin ist.

4. Folie nach einem oder mehreren der Ansprüche 1 bis 3, **dadurch gekennzeichnet, daß** das amorphe Polyolefin abgeleitet ist von mindestens einem cyclischen oder polycyclischen Olefin der folgenden Formeln I bis VI

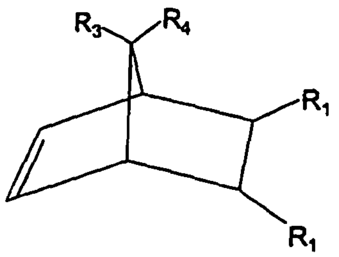

(I)

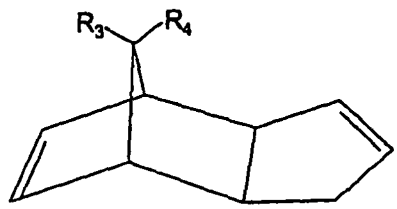

(II)

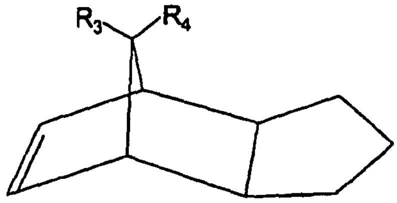

(II')

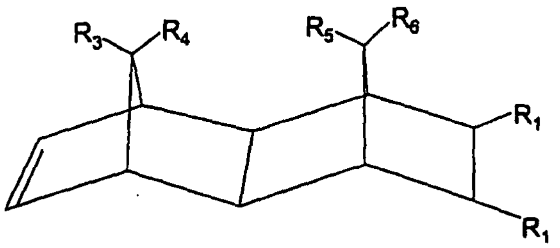

(III)

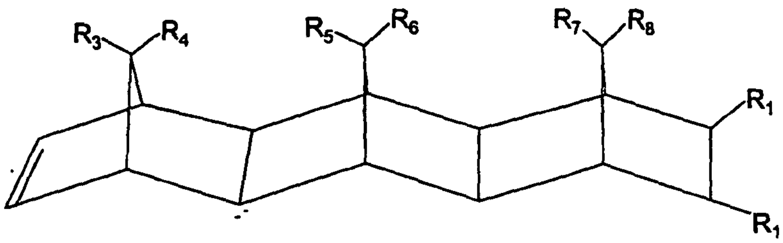

(IV)

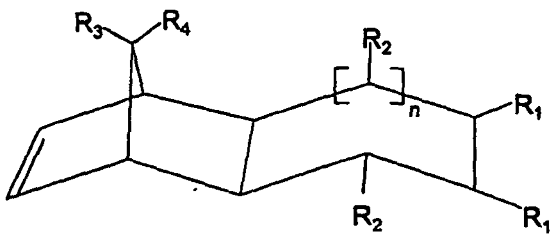

(V)

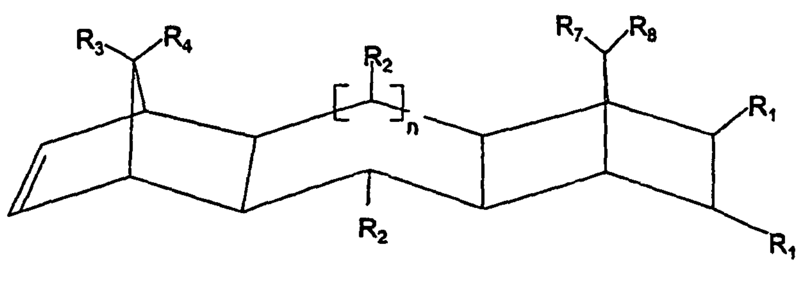

(VI)

worin $R^1$, $R^2$, $R^3$, $R^4$, $R^5$, $R^6$, $R^7$ und $R^8$ gleich oder verschieden sind und ein Wasserstoffatom oder einen $C_1$-$C_{20}$-Kohlenwasserstoffrest, wie einen linearen oder verzweigten $C_1$-$C_8$-Alkylrest, $C_6$-$C_{18}$-Arylrest, $C_7$-$C_{20}$-Alkylenarylrest, einen cyclischen oder acyclischen $C_2$-$C_{20}$-Alkenylrest bedeuten, oder einen gesättigten, ungesättigten oder aromatischen Ring bilden, wobei gleiche Reste $R^1$ bis $R^8$ in den verschiedenen Formeln 1 bis VI eine unterschiedliche Bedeutung haben , worin n Werte von 0 bis 5 annehmen,
und

0 bis 99,9 Gew.-%, vorzugsweise 0,1 bis 99,9 Gew.-%, bezogen auf die Gesamtmasse des Cycloolefincopolymers, polymerisierte Einheiten, welche sich ableiten von einem oder mehreren acyclischen Olefinen der Formel VII

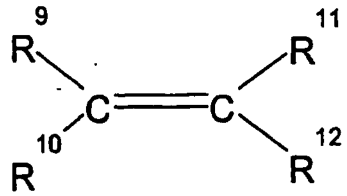

(VII)

worin $R^9$, $R^{10}$, $R^{11}$ und $R^{12}$ gleich oder verschieden sind und ein Wasserstoffatom, einen linearen, verzweigten, gesättigten oder ungesättigten $C_1$-$C_{20}$-Kohlenwasserstoffrest wie einen $C_1$-$C_8$-Alkylrest oder einen $C_6$-$C_{18}$-Arylrest bedeuten.

**5.** Folie nach Anspruch 4, **dadurch gekennzeichnet, daß** das amorphe Polyolefin ein Cycloolefincopolymer ist, das 0 bis 45 Gew.%, bezogen auf seine Gesamtmasse, polymerisierte Einheiten enthält, die sich von einem oder mehreren monoolefinischen Olefinen der Formel VIII

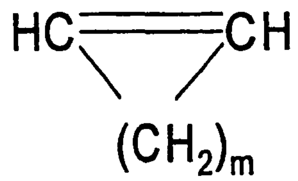

(VIII)

ableiten, worin m eine Zahl von 2 bis 10 ist.

**6.** Folie nach einem oder mehreren der Ansprüche 1 bis 5, **dadurch gekennzeichnet, daß** das amorphe Polyolefin ein Copolymer aus Ethylen und Norbornen ist.

**7.** Folie nach einem oder mehreren der Ansprüche 1 bis 6, **dadurch gekennzeichnet, daß** der Anteil an amorphem Polyolefin in einer Mischung aus mindestens einem teilkristallinen Polyolefin und mindestens einem amorphen Polyolefin vorzugsweise 10 Gew.-% bis 50 Gew.-%, insbesondere 15 Gew.-% bis 40 Gew.-%, beträgt.

**8.** Folie nach einem oder mehreren der Ansprüche 1 bis 7, **dadurch gekennzeichnet, daß** das amorphe Polyolefin eine Glasübergangstemperatur $T_g$ im Bereich von 60 bis 300°C, vorzugsweise 70 bis 250°C, insbesondere 80 bis 200°C, hat, die Vicat-Erweichungstemperatur $T_v$ (VST/B/120) im Bereich von 70 bis 200°C, vorzugsweise von 80 bis 180°C, liegt und ein mittleres Molekulargewicht Mw im Bereich von 1.000 bis 500.000, vorzugsweise 1.500 bis 250.000, insbesondere 3.000 bis 150.000, besitzt.

**9.** Folie nach einem oder mehreren der Ansprüche 1 bis 8, **dadurch gekennzeichnet, daß** die Schichtdicke der Folie eine Stärke von 50 bis 300 µm, vorzugsweise 75 bis 250 µm, aufweist und die Schichtdicken der Deckschichten 2,5 bis 90 % des gesamten Aufbaus betragen.

**10.** Folie nach einem oder mehreren der Ansprüche 1 bis 9, **dadurch gekennzeichnet, daß** als teilkristallines Polyolefin ein Polymer aus Ethylen oder α-Olefinen oder deren Copolymere enthalten ist.

**11.** Verfahren zur Herstellung einer Polyolefin-Mehrschichtfolie aus mindestens drei Schichten, enthaltend 1) a) eine als Basisschicht fungierende Kernschicht A aus mindestens einem amorphen Polyolefin und b) zwei beidseitigen Deckschichten B und C aus einer Mischung aus Polypropylen und mindestens einem amorphen Polyolefin oder II) a) eine Kernschicht A aus einer Mischung mindestens eines teilkristallinen Polyolefins und 5,0 Gew.-% oder mehr mindestens eines amorphen Polyolefins und b) zwei Deckschichten B und C, die gleich oder verschieden sind, aus einem teilkristallinen Polyolefin und/oder einer Mischung aus Polypropylen und einem amorphen Polyolefin, **dadurch gekennzeichnet, daß** die die Folie bildenden Polymeren und/oder Polymermischungen in einem Extruder aufgeschmolzen, anschließend die Schmelze/n durch eine Flachdüse extrudiert werden, die so erhaltene Folie auf einer oder mehreren Walzen abgezogen wird, wobei sie abkühlt und sich verfestigt, oder die aus dem Extruder austretende Schmelze/n durch eine Ringdüse extrudiert werden, wobei die so erhaltene Folie auf einer Blasfolienanlage zur

Folie verarbeitet, über Walzen flachgelegt und abgezogen wird.

**12.** Verfahren nach Anspruch 11, **dadurch gekennzeichnet, daß** die Folie gegebenenfalls gereckt und/oder thermofixiert und/oder oberflächenbehandelt wird.

**13.** Verwendung der Folie nach einem oder mehreren der Ansprüche 1 bis 10 als thermoplastische Verpackungsfolie.

**14.** Verwendung nach Anspruch 13 als Tiefziehfolie in Tiefziehverpackungen. und für Pharma-Blister Verpackungen.

**15.** Tiefziehverpackung und Pharma-Blister-Verpackung, hergestellt aus der Polyolefin-Mehrschichtfolie gemäß einem oder mehreren der Ansprüche 1 bis 10.

**16.** Laminierter Gegenstand, umfassend eine Polyolefin-Mehrschichtfolie nach einem oder mehreren der Ansprüche 1 bis 10 mit Papier und/oder Pappe und/oder einer oder mehreren Metallfolien und/oder weiteren Folien aus thermoplastischen Kunststoff.

**Claims**

**1.** A multilayer polyolefin foil made of at least three layers, comprising I) a) a core layer A functioning as base layer and made of at least one amorphous polyolefin, and b) on the two sides, two outer layers B and C made of a mixture of polypropylene and of at least one amorphous polyolefin, or II) a) a core layer A made of a mixture of at least one semicrystalline polyolefin and 5.0% by weight or more of at least one amorphous polyolefin, and b) two outer layers B and C which are identical or different, made of a semicrystalline polyolefin and/or of a mixture of polypropylene and of at least one amorphous polyolefin.

**2.** The foil as claimed in claim 1, wherein the amorphous polyolefin is a cycloolefin copolymer and/or a cycloolefinic polymer.

**3.** The foil as claimed in claim 1 or 2, wherein the amorphous polyolefin is a copolymer of ethylene and/or of an $\alpha$-olefin and of a cyclic, bicyclic, or polycyclic olefin.

**4.** The foil as claimed in one or more of claims 1 to 3, wherein the amorphous polyolefin derives from at least one cyclic or polycyclic olefin of the following formulae I to VI

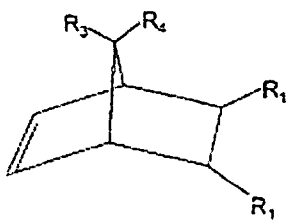

(I)

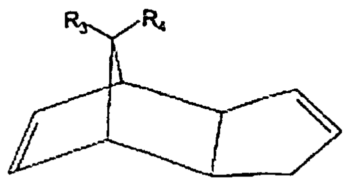

(II)

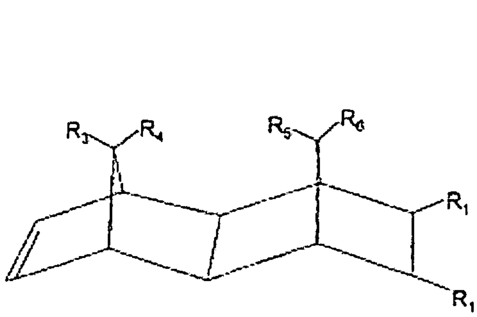

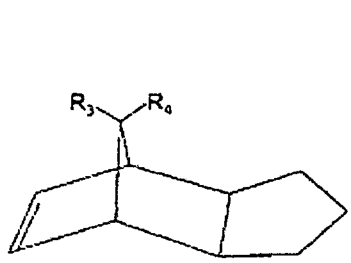

(II')

(III)

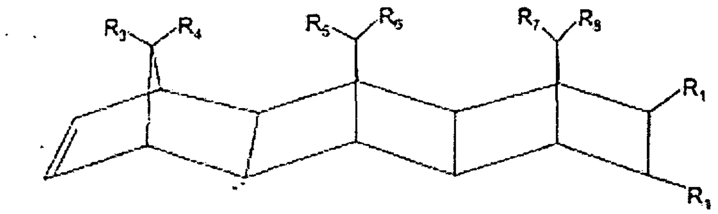

(IV)

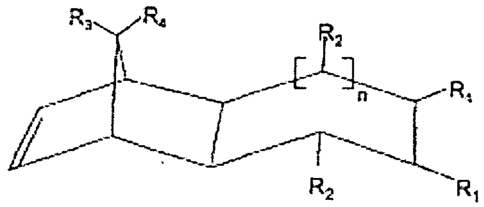

(V)

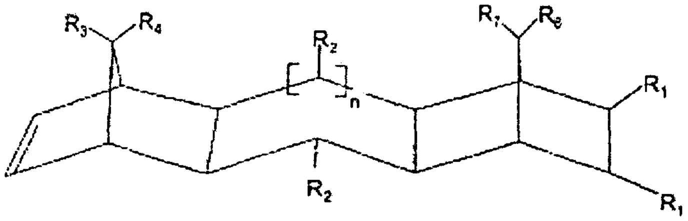

(VI)

where $R^1$, $R^2$, $R^3$, $R^4$, $R^5$, $R^6$, $R^7$, and $R^8$ are identical or different and are a hydrogen atom or a $C_1$-$C_{20}$ hydrocarbon moiety, such as a linear or branched $C_1$-$C_8$-alkyl moiety, $C_6$-$C_{18}$-aryl moiety, $C_7$-$C_{20}$-alkylenearyl moiety, or a cyclic or acyclic $C_2$-$C_{20}$-alkenyl moiety, or form a saturated, unsaturated, or aromatic ring, where the definitions of identical moieties $R^1$ to $R^8$ differ in the various formulae I to VI, wherein n assumes values from 0 to 5,

and

from 0 to 99.9% by weight, preferably from 0.1 to 99.9% by weight, based on the total mass of the cycloolefin copolymer, of polymerized units which derive from one or more acyclic olefins of the formula VII

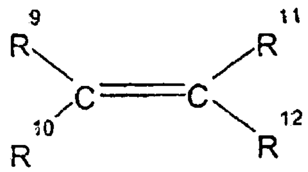

(VII)

in which $R^9$, $R^{10}$, $R^{11}$, and $R^{12}$ are identical or different and are a hydrogen atom, a linear, branched, saturated, or unsaturated $C_1$-$C_{20}$-hydrocarbon moiety, such as a $C_1$-$C_8$-alkyl moiety, or are a $C_6$-$C_{18}$-aryl moiety.

**5.** The foil as claimed in claim 4, wherein the amorphous polyolefin is a cycloolefin copolymer which comprises from 0 to 45% by weight based on its total mass, of polymerized units which derive from one or more monoolefins of the formula VIII

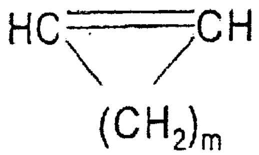

(VIII)

where m is a number from 2 to 10.

**6.** The foil as claimed in one or more of claims 1 to 5, wherein the amorphous polyolefin is a copolymer of ethylene

and norbornene.

**7.** The foil as claimed in one or more of claims 1 to 6, wherein the proportion of amorphous polyolefin in a mixture made of at least one semicrystalline polyolefin and at least one amorphous polyolefin is preferably from 10% by weight to 50% by weight, in particular from 15% by weight to 40% by weight.

**8.** The foil as claimed in one or more of claims 1 to 7, wherein the glass transition temperature $T_g$ of the amorphous polyolefin is in the range from 60 to 300°C, preferably from 70 to 250°C, in particular from 80 to 200°C, the Vicat softening point $T_v$ (VST/B/120) is in the range from 70 to 200°C, preferably from 80 to 180°C, and the average molecular weight Mw of the amorphous polyolefin is in the range from 1000 to 500 000, preferably from 1500 to 250 000, in particular from 3000 to 150 000.

**9.** The foil as claimed in one or more of claims 1 to 8, the thickness of which is from 50 to 300 μm, preferably from 75 to 250 μm, where the thicknesses of the outer layers represent from 2.5 to 90% of the total.

**10.** The foil as claimed in one or more of claims 1 to 9, wherein semicrystalline polyolefin comprises a polymer of ethylene or of α-olefins or comprises copolymers thereof.

**11.** A process for producing a multilayer polyolefin foil made of at least three layers, comprising I) a) a core layer A functioning as base layer and made of at least one amorphous polyolefin, and b) on the two sides, two outer layers B and C made of a mixture of polypropylene and of at least one amorphous polyolefin, or II) a) a core layer A made of a mixture of at least one semicrystalline polyolefin and 5.0% by weight or more of at least one amorphous polyolefin, and b) two outer layers B and C which are identical or different, made of a semicrystalline polyolefin and/or of a mixture of polypropylene and of at least one amorphous polyolefin, which comprises melting, in an extruder, the polymer mixtures and/or polymers forming the foil, then extruding the melt(s) through a flat-film die, drawing off the resultant foil on one or more rolls, whereupon it cools and solidifies, or extruding the melt(s) emerging from the extruder through an annular die, whereupon the resultant film is processed in a blown-film plant to give the foil, collapsed by way of rolls, and drawn off.

**12.** The process as claimed in claim 11, wherein the foil is optionally stretched and/or heat-set, and/or surface-treated.

**13.** The use of the foil as claimed in one or more of claims 1 to 10 as thermoplastic packaging foil.

**14.** The use as claimed in claim 13 as thermoforming foil in thermoformed packaging and for blister packs for pharmaceutical products.

**15.** A thermoformed packaging or a blister pack for a pharmaceutical product, produced from the multilayer polyolefin foil as claimed in one or more of claims 1 to 10.

**16.** A laminated article encompassing a multilayer polyolefin foil as claimed in one or more of claims 1 to 10 with paper and/or paperboard, and/or with one or more metal foils, and/or with further foils made of thermoplastic.

**Revendications**

**1.** Feuille de polyoléfine multicouche comprenant au moins trois couches contenant

I)

a) une couche centrale A jouant le rôle de couche de base, formée d'au moins une polyoléfine amorphe et
b) deux couches de couverture B et C bilatérales formées d'un mélange de polypropylène et d'au moins une polyoléfine amorphe
ou

II)

a) une couche centrale A en un mélange d'au moins une polyoléfine partiellement cristalline et de 5% en poids ou plus d'au moins une polyoléfine amorphe et

b) deux couches de couverture B et C qui sont identiques ou différentes, formées d'une polyoléfine partiellement cristalline et/ou d'un mélange de polypropylène et d'au moins une polyoléfine amorphe.

**2.** Feuille selon la revendication 1, **caractérisée en ce que** la polyoléfine amorphe est un copolymère de cyclooléfine et/ou un polymère cyclooléfinique.

**3.** Feuille selon la revendication 1 ou 2, **caractérisée en ce que** la polyoléfine amorphe est un copolymère d'éthylène et/ou une $\alpha$-oléfine et d'une oléfine cyclique, bicyclique ou polycyclique.

**4.** Feuille selon l'une quelconque des revendications 1 à 3, **caractérisée en ce que** la polyoléfine amorphe est dérivée d'au moins une oléfine cyclique ou polycyclique présentant l'une des formules 1 à VI suivantes

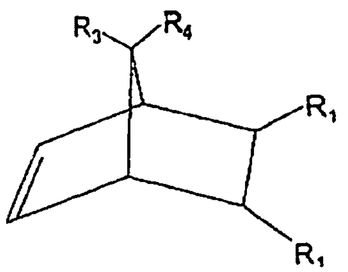

(I)

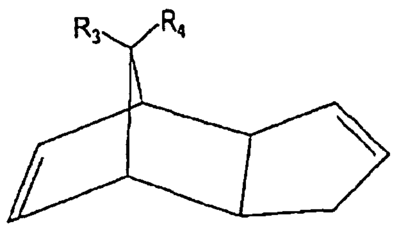

(II)

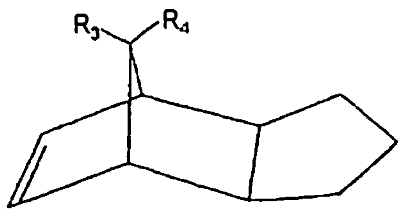

(II')

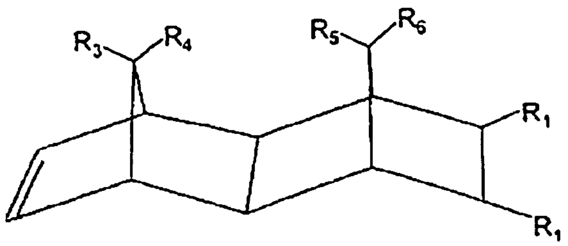

(III)

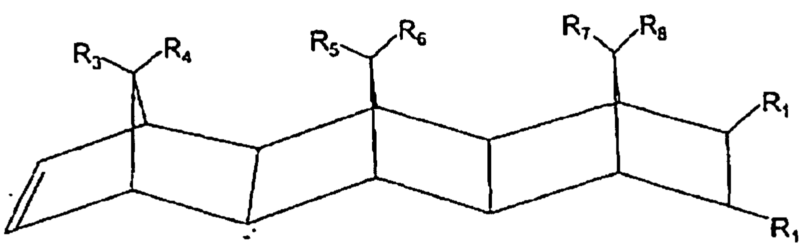

(IV)

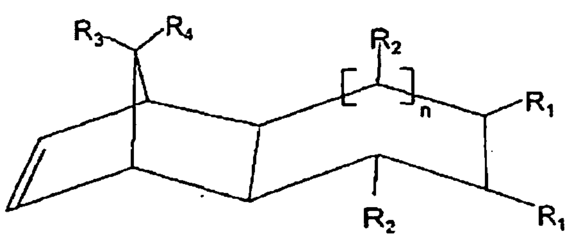

(V)

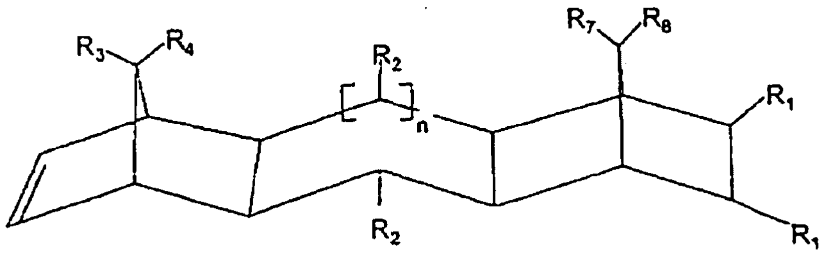

(VI)

dans lesquelles $R^1$, $R^2$, $R^3$, $R^4$, $R^5$, $R^6$, $R^7$ et $R^8$ sont identiques ou différents et signifient un atome d'hydrogène ou un résidu hydrocarboné en $C_1$ à $C_{20}$, tel qu'un radical alkyle en $C_1$ à $C_8$ linéaire ou ramifié, un radical aryle en $C_6$ à $C_{18}$, un radical alcényle en $C_2$ à $C_{20}$ cyclique ou acyclique, ou forment un cycle saturé, insaturé ou aromatique, les mêmes radicaux $R^1$ à $R^8$ ayant différentes significations dans les différentes formules 1 à VI, dans lesquelles n présente des valeurs de 0 à 5,
et
0 à 99,9% en poids, de préférence 0,1 à 99,9% en poids, rapportés à la masse totale du copolymère de cyclooléfine, d'unités polymérisées, lesquelles dérivent d'une ou de plusieurs oléfines acycliques de formule VII

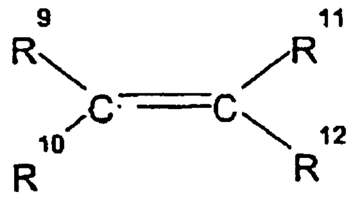

(VII)

dans laquelle $R^{10}$, $R^{11}$ et $R^{12}$ sont identiques ou différents et signifient un atome d'hydrogène, un radical hydrocarboné en $C_1$ à $C_{20}$ linéaire, ramifié, saturé ou insaturé, tel un radical alkyle en $C_1$ à $C_8$ ou un radical aryle en $C_6$ à $C_{18}$.

5. Feuille selon la revendication 4, **caractérisée en ce que** la polyoléfine amorphe est un copolymère de cyclooléfines qui, rapporté à sa masse totale, contient 0 à 45% en poids d'unités polymérisées qui dérivent d'une ou de plusieurs oléfines monooléfiniques de la formule VIII

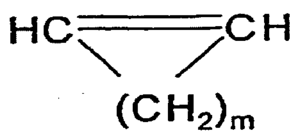

(VIII)

dans laquelle m est un nombre de 2 à 10.

6. Feuille selon l'une ou plusieurs des revendications 1 à 5, **caractérisée en ce que** la polyoléfine amorphe est un copolymère d'éthylène et de norbonène.

7. Feuille selon l'une ou plusieurs des revendications 1 à 6, **caractérisée en ce que** la proportion de polyoléfines amorphes dans un mélange d'au moins une polyoléfine partiellement cristalline et d'au moins une polyoléfine amorphe est de préférence de 10% en poids à 50% en poids, en particulier de 15% en poids à 40% en poids.

8. Feuille selon l'une ou plusieurs des revendications 1 à 7, **caractérisée en ce que** la polyoléfine amorphe présente une température de transition vitreuse Tg dans l'intervalle de 60 à 300°C, de préférence de 70 à 250°C, en particulier de 80 à 200°C, **en ce que** sa température de ramollissement Vicat $T_v$ (VSTB/120) est comprise dans l'intervalle de 70 à 200°C, de préférence de 80 à 180°C et **en ce qu'**elle possède une masse molaire moyenne Mw dans l'intervalle de 1.000 à 500.000, de préférence de 1.500 à 250.000, en particulier de 3.000 à 150.000.

9. Feuille selon l'une ou plusieurs des revendications 1 à 8, **caractérisée en ce que** l'épaisseur de couche de la feuille présente une valeur de 50 à 300 $\mu$m, de préférence de 75 à 250 $\mu$m, et **en ce que** les épaisseurs de couche des couches de couverture comptent pour 2,5 à 90% de l'ensemble de la structure.

**10.** Feuille selon l'une ou plusieurs des revendications 1 à 9, **caractérisée en ce qu'**un polymère d'éthylène ou d'α-oléfines ou leurs copolymères y sont contenus comme polyoléfine partiellement cristalline.

**11.** Procédé pour la fabrication d'une feuille de polyoléfine multicouche en au moins trois couches contenant

I)

a) une couche centrale A jouant le rôle de couche de base, formée d'au moins une polyoléfine amorphe et
b) deux couches de couverture B et C bilatérales formées d'un mélange de polypropylène et d'au moins une polyoléfine amorphe
ou

II)

a) une couche centrale A en un mélange d'au moins une polyoléfine partiellement cristalline et de 5% en poids ou plus d'au moins une polyoléfine amorphe et
b) deux couches de couverture B et C qui sont identiques ou différentes, formées d'une polyoléfine partiellement cristalline et/ou d'un mélange de polypropylène et d'au moins une polyoléfine amorphe.

**caractérisé**
**en ce que** les polymères et/ou les mélanges de polymères formant la feuille sont fondus dans une extrudeuse,
**en ce que** la ou les matière(s) fondue(s) est/sont ensuite extrudée(s) à travers une filière plate,
**en ce que** la feuille ainsi obtenue est tirée sur un ou plusieurs rouleaux, lors de quoi elle se refroidit et se solidifie,
ou
**en ce que** la ou les matière(s) fondue(s) quittant l'extrudeuse est/sont extrudée(s) à travers une filière annulaire, en ce que la feuille ainsi obtenue est transformée dans une installation de soufflage de feuille, aplatie sur des rouleaux et est retirée par traction.

**12.** Procédé selon la revendication 11, **caractérisé en ce que**, le cas échéant, la feuille est étirée et/ou thermofixée et/ou traitée en surface.

**13.** Utilisation de la feuille selon l'une ou plusieurs des revendications 1 à 10, comme feuille d'emballage thermoplastique.

**14.** Utilisation selon la revendication 13, comme feuille emboutie dans des emballages emboutis et pour des emballages de blisters pharmaceutiques.

**15.** Emballage embouti et emballage de blisters pharmaceutiques, fabriqués à partir de la feuille de polyoléfine multicouche selon l'une ou plusieurs des revendications 1 à 10.

**16.** Objet stratifié comprenant une feuille multicouche de polyoléfine selon l'une ou plusieurs des revendications 1 à 10, associé à du papier et/ou du carton et/ou une ou plusieurs feuilles de métal et/ou une ou plusieurs autres feuilles en un matériau plastique thermoplastique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19828867
- DE 19828857
- EP 0631864 A
- EP 0920989 A
- JP 06305100 A
- EP 0407870 A
- EP 0485893 A
- EP 0503422 A
- DE 4036264 A
- EP 0078633 A
- EP 0044515 A
- EP O485893 A